# EUROPEAN PATENT SPECIFICATION

(11) **EP 3 609 654 B1**
(45) Date of publication and mention of the grant of the patent: **10.01.2024**
(21) Application number: 17725945.4
(22) Date of filing: 23.05.2017
(51) Int. Cl.: B25J 9/16, G05B 19/05, G05B 19/409

(54) **MODE CONTROL OF INDUSTRIAL ROBOTS IN A ROBOT CELL**
MODUSSTEUERUNG VON INDUSTRIEROBOTERN IN EINER ROBOTERZELLE
COMMANDE DE MODE DE ROBOTS INDUSTRIELS DANS UNE CELLULE DE ROBOT

(30) Priority: 11.04.2017 US 201762484199 P
(43) Date of publication of application: 19.02.2020
(73) Proprietor: ABB Schweiz AG, 5400 Baden (CH)
(72) Inventor: BREDAHL, Jan, 723 56 Västerås (SE); LINDSTEDT, Jonas, 725 91 Västerås (SE); ROMBERG, Stefan, 635 31 Kvicksund (SE)
(74) Representative: Kransell & Wennborg KB
(86) International application number: PCT/EP2017/062428
(87) International publication number: WO 2018/188764

(56) References cited:
- WO-A1-2009/097895
- US-A1- 2015 239 120

## Description

### Technical Field

The present invention generally relates to industrial robot control, and particularly to a technique of changing operating mode for industrial robots that are located within a robot cell of a manufacturing system.

### Background Art

Industrial robots are well known in the art. It is not uncommon that several industrial robots are combined, optionally together with other related machines, into a manufacturing system. One example of such a manufacturing system is a so-called integrated manufacturing system (IMS). The manufacturing system may comprise one or more robot cells, also known as work cells or manufacturing cells. A robot cell is a safeguarded region that includes one or more industrial robots, and possibly other related machines such as robot positioners, workpiece positioners, conveyers, etc. The respective industrial robot is controlled by a dedicated robot control device to perform a predefined sequence of tasks. The control of plural industrial robots within a robot cell or in different robot cells, may be synchronized by control signals provided by a central computer device, e.g. a PLC, to the robot control devices, as well as to other related machines in the robot cell.

Each robot control device may be set in different operating modes. One such operating mode is an automatic mode or production mode in which the robot control device operates autonomously as programmed and at full speed, subject to control signals from the central computer device. Another operating mode is a manual mode, also designated as teach mode, in which an operator is allowed to manually control the industrial robot to move at reduced speed by a pendant device which is connected to the robot control device. The manual mode may e.g. be used during programming, maintenance, testing or installation of a robot, or to resolve an operational failure of the industrial robot within the robot cell.

Conventionally, the operating mode is changed individually for each robot control device, typically by the operator turning a dedicated mechanical switch on a control panel that is mounted outside of the robot cell and is connected to the robot control device. Alternatively, the operating mode may be changed by the operator manipulating a dedicated mechanical switch or a virtual button on a touch screen of the pendant device.

A third way of carrying out mode changes in robot systems is known from US2015239120A1. This reference discloses a robot system including robot control devices, a network, and a mode changing device, which switches between an automatic operation mode and teaching mode. In the state where the mode changing device selects the automatic operation mode, drive power is supplied to all of the robots regardless of the state of the enable device. In the state where the mode changing device selects the teaching mode, when the enable device does not permit operation of at least two robots, the drive power of all of the robots is cut.

Further, WO2009097895A1 discloses an industrial robot system comprising a plurality of robots, a plurality of robot controllers for controlling the robots, a handheld teach pendant unit for teaching and programming the robots, and a communication link arranged for transmitting and receiving information between the teach pendant unit and the robot controllers. The robot system comprises login means for logging the teach pendant unit in to one of the controllers, thereby allowing the teach pendant unit access to control programs on the controller. The teach pendant unit comprises a display means for displaying control programs retrieved from the controller. The login means is configured to allow the teach pendant unit to simultaneously be logged on to two or more of the controllers, thereby allowing the teach pendant unit simultaneous access to control programs on two or more controllers, and said display means is configured to simultaneously display control programs from at least two controllers.

### Brief Summary

It is an objective of the invention to at least partly overcome one or more limitations of the prior art.

Another objective is to facilitate a change of operating mode for a plurality of industrial robots in a robot cell of a manufacturing system.

A further objective is to facilitate such a change of operating mode while safeguarding operator safety.

One or more of these objectives, as well as further objectives that may appear from the description below, are at least partly achieved by a manufacturing system according to the independent claim, example embodiments being defined by dependent claims.

### Brief Description of Drawings

Embodiments of the invention will now be described in more detail with reference to the accompanying schematic drawings.
FIG. 1 is a top plan view of a robot cell comprising industrial robots and related machines.
FIG. 2 is a block diagram of control system for a robot cell.
FIG. 3 is a block diagram of a robot control device in the control system of FIG. 2.
FIG. 4 illustrates switching between different modes of a robot control device.
FIGS 5A-5D are signal diagrams illustrating control signals exchanged between a central computer device and a robot controller device in the control system of FIG 2.

### Detailed Description of Example Embodiments

Embodiments of the present invention will now be described more fully hereinafter with reference to the accompanying drawings, in which some, but not all, embodiments of the invention are shown. Indeed, the invention may be embodied in many different forms and should not be construed as limited to the embodiments set forth herein; rather, these embodiments are provided so that this disclosure may satisfy applicable legal requirements. Like numbers refer to like elements throughout.

Also, it will be understood that, where possible, any of the advantages, features, functions, devices, and/or operational aspects of any of the embodiments of the present invention described and/or contemplated herein may be included in any of the other embodiments of the present invention described and/or contemplated herein. In addition, where possible, any terms expressed in the singular form herein are meant to also include the plural form and/or vice versa, unless explicitly stated otherwise. As used herein, "at least one" shall mean "one or more" and these phrases are intended to be interchangeable. Accordingly, the terms "a" and/or "an" shall mean "at least one" or "one or more," even though the phrase "one or more" or "at least one" is also used herein. As used herein, except where the context requires otherwise owing to express language or necessary implication, the word "comprise" or variations such as "comprises" or "comprising" is used in an inclusive sense, that is, to specify the presence of the stated features but not to preclude the presence or addition of further features in various embodiments of the invention.

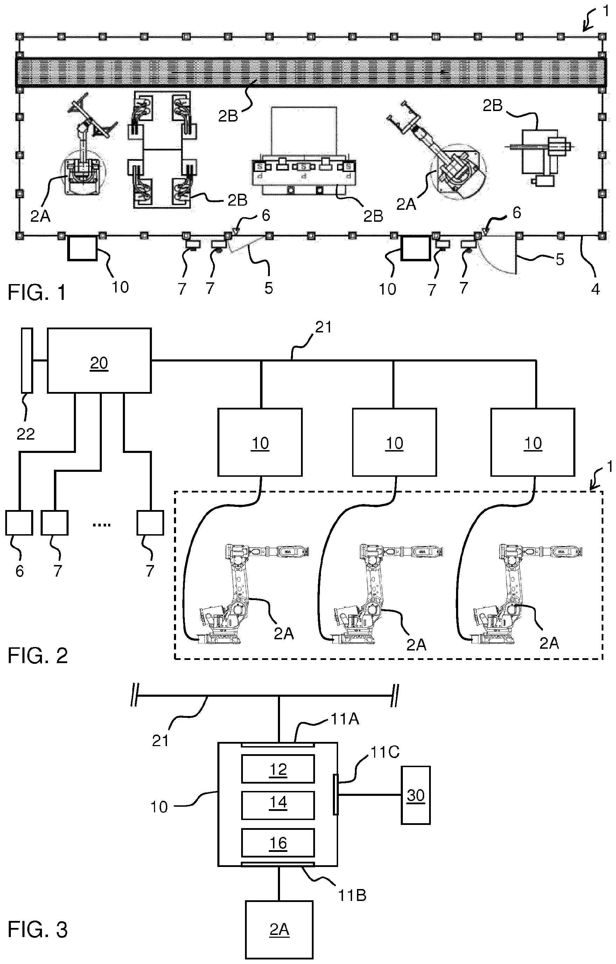

FIG. 1 is a plane view of a robot cell 1 in a manufacturing system. Although not shown in FIG. 1, the manufacturing system may comprise more than one robot cell. In the illustrated example, the robot cell 1 comprises two industrial robots 2A and four related machines 2B. The related machines 2B are optional and may, e.g., be one or more of a sorting machine, a conveyer, a workpiece positioner, a robot positioner, a machine tool, etc. As used herein, an industrial robot 2A (or "robot") refers to any machine that comprises a jointed manipulation structure that is configured for movement of an end effector having a plurality of degrees of freedom, such as six degrees of freedom. The robot cell 1 is a safeguarded area or zone that includes the industrial robots 2A and the related machines 2B. In the illustrated example, the robot cell 1 is delimited by a physical protective barrier 4, e.g. formed by wall portions, panels, fences, cages, etc. The robot cell 1 is accessed via doors or gates 5 in the protective barrier 4. A door switch 6 is provided at each door 5 to signal whether the door 5 is open or closed. In an alternative, at least one of the doors 5 may be replaced by an opening which is supervised to detect entry of an individual into the robot cell 1, e.g. by a device that forms a light barrier across the opening and signals when the light barrier is broken. It is also conceivable that the robot cell 1 comprises one or more presence or movement sensors (not shown) that cover all or part of the robot cell 1 to detect presence of an individual. A non-limiting example of such a presence/movement sensor is a laser scanner.

In the illustrated example, a robot control device 10 for the respective robot 2A is located outside the robot cell 1. The robot control device 10 is configured to operate the robot 2A in a manner well-known to the skilled person to achieve a desired robot motion, e.g. a trajectory of its end effector. It should be noted that a single robot control device 10 may be configured and connected to operate more than one robot 2A.

Further, in the example of FIG. 1, a set of dedicated operator switches 7 are located at the respective door 5. One operator switch 7 may be an emergency stop switch, which when manually actuated by the operator causes all machines 2A, 2B in the robot cell 1 to be stopped, and another operator switch 7 may be a reset switch or acknowledgement switch, which is manually actuated by the operator after leaving the robot cell 1 in order to allow the robots 2A in the robot cell 1 to be switched into automatic mode by a central computer device (below).

FIG. 2 illustrates a control system for a plurality of robots 2A within a robot cell 1. The control system may be applied to the robot cell 1 in FIG. 1, but is illustrated to control three industrial robots 2A in FIG. 2. The control system comprises a central computer device 20, denoted "master computer" in the following, which is connected to receive input signals from switches 6, 7, as well as any other relevant switch(es) and/or sensor(s) associated with the robot cell 1. The master computer 20 may be implemented by a PLC, e.g. a so-called safety PLC, or any other suitable computer system. The master computer 20 is connected to the robot control devices 10 via a communication network 21 which may be based on any suitable fieldbus standard for wired communication. In an alternative, the network 21 may be wireless or composed of individual wirings that extend between the master computer 20 and the respective robot control device 10. In a preferred embodiment, the communication over the network 21 is "safe", e.g. in the sense that it is possible to detect and optionally correct errors in the transmitted data, e.g. caused by signal interferences or data tampering. For example, the communication on the network 21 may be based on a data communication protocol that provides data redundancy and transfers checksums. The communication may also be made safe by a redundancy of components that are critical for the communication (e.g. processors, power supplies, etc.), and provision of devices that are configured to suppress interferences, such as surgent and transient voltages, on the communication network 21.

The master computer 20 may be configured to synchronize the operation of one or more of the robots 2A in the robot cell 1, by providing dedicated synchronization signals to the respective robot control device 10. Such synchronization of operation is well-known to the skilled person and will not be described in further detail herein. Although not shown in FIG. 2, it is conceivable that the master computer 20 is connected to, and synchronizes, robot control devices 10 that operate robots 2A in more than one robot cell 1. It is also conceivable that the master computer 20 is connected to, and synchronizes, robot control devices 10 that operate robots 2A located within a sub-region of a robot cell 1, e.g. a so-called work zone.

In the example of FIG. 2, a control panel 22 is coupled to the master computer 20 to define an HMI (Human-Machine Interface) for an operator. The control panel 22 may comprise one or more of a display, a touch panel, a loudspeaker, a microphone, a keyboard, a mouse, an indicator lamp, a button, a switch, etc.

The master computer 20 is further configured to transmit central mode selection signals to the robot control devices 10 that operate the robots 2A in the robot cell 1 (or a sub-region thereof), and possibly robots in further robot cells, so that all of the robot control devices 10 receive the same central mode selection signals. For example, the master computer 20 may generate the central mode selection signals based on operator input via the control panel 22 or by programmed decision. The central mode selection signals may, subject to an evaluation a mode controller in the respective robot control device 10, cause the robot control devices 10 to change their operating mode in unison.

FIG. 3 shows an example of a robot control device 10, which comprises a first signal interface 11A for data communication on the communication network 21, a second signal interface 11B for data communication with a robot 2A, and a third signal interface 11C for data communication with a local computer device 30. Optionally, one or more of the signal interfaces 11A-11C may be merged into a single signal interface. The local computer device 30 may be a so-called pendant unit (also known as flex pendant, teach pedant or TPU), which is well-known in the art. The pendant unit 30 is a handheld unit which may be manipulated by an operator to perform many of the tasks involved when operating a robot system, such as running programs, jogging the robot 2A, modifying robot programs, reviewing robot settings, and so on. The pendant unit 30 may further allow the operator to set the robot control device 10 in a manual operating mode (below), by causing the pendant unit 30 to transmit a local mode selection signal to the robot control device 10. The pendant unit 30 also allows an operator to manually operate the robot 2A when the robot control device 10 is set in the manual operating mode. In some embodiments, a dedicated pendant unit 30 is connected to each robot control device 10. In other embodiments, one pendant unit 30 may be used with several robot control devices 10 by the operator manually connecting the pendant unit 30 to a robot control device 10 as needed.

In the example of FIG. 3, the robot control device 10 comprises a safety controller 12, a mode controller 14 and a robot controller 16. The safety controller 12 is configured to ensure the integrity of the incoming signals via the first signal interface 11A, e.g. by receiving, processing, verifying and optionally correcting the incoming signals and then providing the verified/corrected signals, or corresponding data, to the mode controller 14 and/or the robot controller 16. The incoming signals may include the above-mentioned synchronization signals and central mode selection signals. The robot controller 16 is configured to generate and transmit, via the signal interface 11B, movement control signals for controlling the movement of the robot 2A, in a manner well-known to the skilled person.

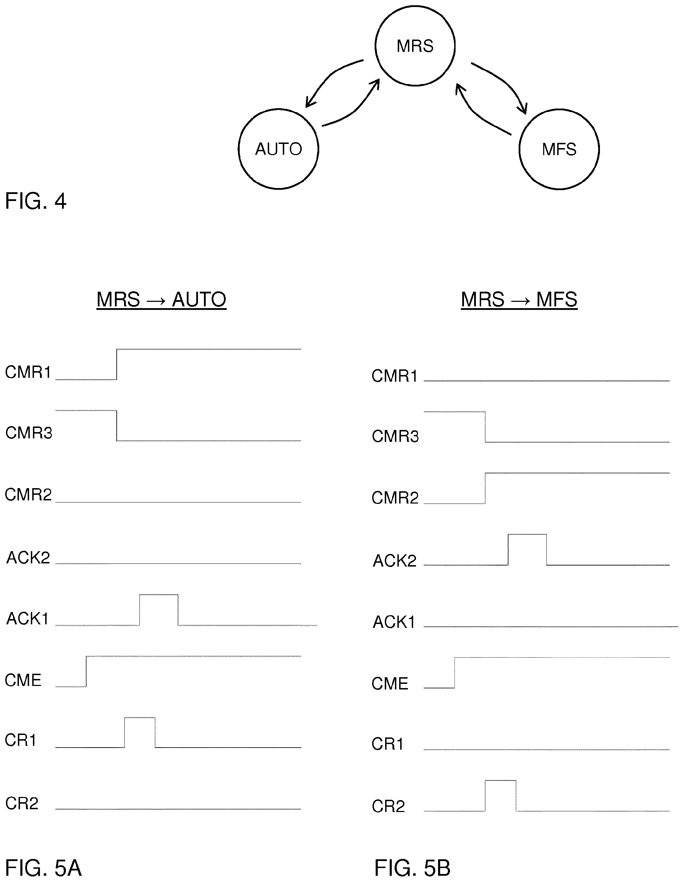

The mode controller 14 is configured to implement a mode switching logic for setting the operating mode of the robot control device 10 based on signals received from the master computer 20, via the first signal interface 11A and the safety controller 12, and signals received from the pendant unit 30 via the third signal interface 11C. It is shown in FIG. 4 that the mode controller 14 is operable to set the robot control device 10 in three different modes, designated AUTO, MRS and MFS. The AUTO mode is an automatic mode or production mode, in which the robot controller 16 operates autonomously, in accordance with a predefined software program (control program) and subject to the above-mentioned synchronization signals from the master computer 20, to transmit movement control signals via signal interface 11B so as to cause the robot 2A to perform a dedicated work task. The MRS mode is a Manual Reduced Speed mode, in which the robot controller 16 controls the robot 2A to move at low speed based on an operation control signal from the pendant unit 30. Thus, the MRS mode allows an operator to control the movement of the robot 2A by use of the pendant unit 30. The MFS mode is a Manual Full Speed mode, in which the robot controller 16 controls the robot 2A to move at high speed based on an operation control signal from the pendant unit 30. In MFS mode, the operator may be given the option to stepwise increase the speed of the robot movement to a maximum speed via the pendant unit 30.

In the illustrated embodiment, the mode switching logic is configured to allow the operating mode to be switched between AUTO and MRS and between MRS and MFS. Thus, a switch between MFS and AUTO must be done via MRS.

In some examples not covered by the independent claims, the robot control device 10 is only configured for operation in the AUTO mode and the MRS mode, and the mode switching logic is configured to switch between AUTO and MRS in accordance with FIG. 4.

In the following, detailed examples of the mode switching logic will be presented with reference to FIGS 5A-5D which illustrate relevant signals that are provided by the master computer 20 and the robot control device 10 over the communication network 21. The master computer 20 provides signals CMR1, CMR2, CMR3, ACK1, ACK2 and CME. The robot control device 10 provides signals CR1 and CR2. In the illustrated example, all signals represent one bit of information, i.e. they have two logic states, low and high, e.g. representing values 0 and 1, respectively.

CMR1-CMR3 correspond to the above-mentioned central mode selection signals, where CMR1 is a Central Mode Request for the AUTO mode, CMR2 is a Central Mode Request for the MFS mode, and CMR3 is a Central Mode Request for the MRS mode. The high and low states of CMR1-CMR3 indicate a selection and non-selection, respectively, of the associated operating mode. It is realized that the mode controller 14 is able to identify a selected operating mode based on the logic combination of high/low states among CMR1-CMR3. The provision of a separate central mode selection signal for each operating mode may reduce the risk for faults and errors in the mode switching, by enabling a more robust interpretation of the respective central mode selection signal.

CR1 and CR2 are Confirmation Request signals, where CR1 is used to signal a need for confirmation of a selection of the AUTO mode, and CR2 is used to signal a need for confirmation of a selection of the MFS mode. A high state of CR1 or CR2 represents a request for confirmation.

ACK1 and ACK2 are Acknowledgement signals, where ACK1 is used to signal an acknowledgement of a selection of mode AUTO, and ACK2 is used to signal an acknowledgement of a selection of mode MFS. A high state of ACK1 or ACK2 represents an acknowledgement.

CME is a Central Mode Enable signal, which is a signal set by the master computer 20 based on input from one or more sensors and/or switches associated with the robot cell 1 to indicate that the robot cell 1 is secured and free of individuals, in this example by setting CME to high. In the example of FIG. 1, the master computer 20 may set CME based on the states of the switches 6 and 7 in FIG. 1. In one example, CME may be set to high if all doors 5 are closed, as indicated by switches 6. In another example, CME may be set to high if all doors 5 are closed, and if the respective confirmation switch 7 has been actuated by the operator after closing the respective door 5. In yet another example, which may be combined with any of the foregoing examples, CME may set to high if a presence/movement sensor associated with the robot cell 1 indicates absence of individuals in the robot cell 1 or a portion thereof.

The examples in FIGS 5A-5D are based on a set of rules implemented by the mode switching logic in the mode controller 14, as follows.

Rule 1: If the master computer 20 requests a mode change when CME is low, the current operating mode should be maintained, i.e. no mode change is performed.

Rule 2: A request from the master computer 20 for mode change from MRS to AUTO is deemed valid if the states of CMR1-CMR3 are consistent, i.e. CMR1 is high, CMR2 is low, and CMR3 is low, and provided that CME is high.

Rule 3: A request from the master computer 20 for mode change to from MRS to MFS is deemed valid if the states of CMR1-CMR3 are consistent, i.e. CMR1 is low, CMR2 is high, and CMR3 is low, and provided that CME is high.

Rule 4: A request from the master computer 20 for mode change to from AUTO or MFS to MRS is deemed valid if CMR3 is high, irrespective of the states of CMR1 and CMR2, and provided that CME is high.

Rule 5: When a valid request for mode change from MRS to either MFS or AUTO is received from the master computer 20, a request for acknowledgement shall be transmitted to the master computer 20. A switch of mode is performed only upon receipt of the acknowledgement from the master computer 20.

Rule 6: If the acknowledgement has not been received from the master computer 20 within a predefined time period from transmission of the request, e.g. 10 seconds, the valid request for mode change from the master computer 20 is ignored and the MRS mode is maintained.

Rule 7: If the safety controller 12 indicates an error in one of CMR1-CMR3 in connection with a request for mode change from MRS to either MFS or AUTO, the MRS mode is maintained.

Rule 8: If CME is high and a request for mode change to MRS or MFS is received from the pendant unit, the mode controller 14 changes the mode accordingly and enters a local control state. Any subsequent requests for mode change from the master computer 20 are ignored by the mode controller 14 in the local control state.

Rule 9: The local control state of the mode controller 14 is terminated when CME is toggled, e.g., from high to low and back to high.

Each of Rules 1-9 offer distinct technical advantages. Rule 1 ensures safety of operators and other personnel by only allowing the operating mode to be switched when the robot cell 1 is secured. Rules 2-3 and 5-7 each reduces the impact of data transmission errors occurring in the network 21 and operational errors in the safety controller 12 and the master computer 20, by preventing inadvertent switching to an operating mode that allows the robot 2A to move at high speed (AUTO, MFS). Rule 4 applies less strict conditions for switching to the mode that only allows the robot 2A to move at low speed (MRS), thereby ensuring that the robot 2A may be moved even in presence of inconsistent central mode selection signals (CMR1-CMR3). Rule 8 ensures single point of control. Rule 9 provides a well-controlled, centralized and simple way of terminating the mode control via the pendant unit 30, and may e.g. be used to force the operator to actively toggle a switch (e.g. 7 in FIG. 1) to thereby toggle CME and enable the master computer 20 to switch the operating mode of the robot control device 10.

In respect of Rules 8-9, it may be desirable for all robot control devices 10 associated with the robot cell 1 to ignore requests for mode change from the master computer 20 whenever a pendant unit 30 is operated to request a mode change at one of the robot control devices 10. In one embodiment, this is achieved by configuring the robot control device 10 that is set in the local control state to provide, e.g. via network 21, a dedicated interlocking signal to the other robot control devices 10. In this context, the mode controller 14 may implement a Rule 10 that causes the mode controller 14, based on the interlocking signal, to ignore requests for mode change from the master computer 20 until the CME is toggled in accordance with Rule 9.

As an alternative to the master computer 20 providing the CME signal, for use by Rules 1-4 and 9-10, the respective robot control device 10 may acquire one or more input signals from the relevant switches and/or sensors associated with the robot cell 1, e.g. via signal interface 11C, and determine a state corresponding to the state indicated by the CME signal, e.g. that the robot cell 1 is secured and free of individuals.

FIG. 5A illustrates signals provided on the network 21 when the master computer 20 causes the respective robot control device 10 in FIG. 2 to switch operating mode from MRS to AUTO (FIG. 4). In this example, after CME is switched to high, the master computer 20 switches CMR1 to high and CMR3 to low, while maintaining CMR2 at low. According to Rules 1, 2 and 5, the robot control device 10 requests acknowledgement by setting CR1 to high and CR2 to low. The states of CR1 and CR2 cause the master computer 20 to set ACK1 to high and ACK2 to low. According to Rule 5, the operating mode of the robot control device 10 is thereby switched to AUTO.

In an example, FIG. 5A may represent a use case in which production is started after service has been completed and the operator has secured the robot cell 1 so that CME is switched to high. The operator is able to start production by simply selecting mode AUTO on the control panel 22 of the master computer 20, or by programmed decision in combination with operator acknowledgement.

FIG. 5B illustrates signals provided on the network 21 when the master computer 20 causes the respective robot control device 10 in FIG. 2 to switch operating mode from MRS to MFS (FIG. 4). In this example, after CME is switched to high, the master computer 20 switches CMR2 to high and CMR3 to low, while maintaining CMR1 at low. According to Rules 1, 3 and 5, the robot control device 10 requests acknowledgement by setting CR2 to high and CR1 to low. The states of CR1, CR2 causes the master computer 20 to set ACK2 to high and ACK1 to low. According to Rule 5, the operating mode of the robot control device 10 is thereby switched to MFS.

In an example, FIG. 5B may represent a use case in which an operator wishes to test all robots 2A in the robot cell 1 at high or full speed after having resolved a problem, e.g. a jammed robot, in mode MRS. This is achieved by the operator simply selecting mode MFS on the control panel 22 of the master computer 20.

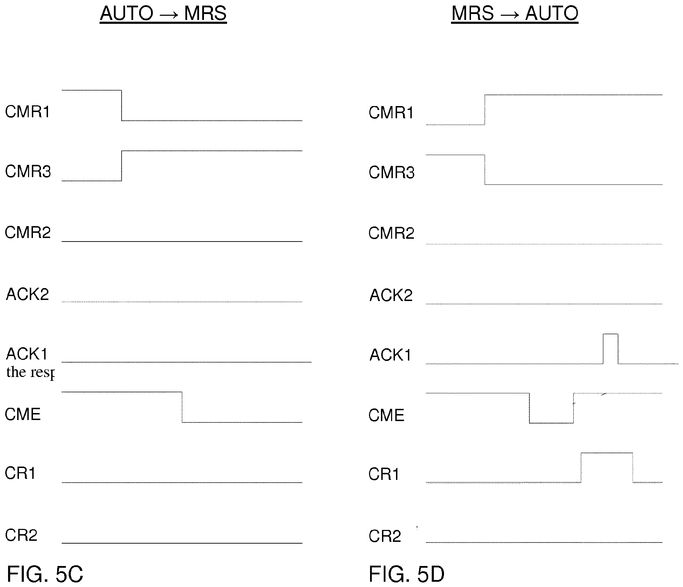

FIG. 5C illustrates signals provided on the network 21 when the master computer 20 causes the respective robot control device 10 in FIG. 2 to switch operating mode from AUTO to MRS (FIG. 4). In the illustrated example, CME is high, and the master computer 20 switches CMR 3 to high and CMR1 to low, while maintaining CMR2 at low. According to Rules 1 and 4, the operating mode of the robot control device 10 is thereby switched to MRS. In the particular example of FIG. 5C, CME is switched to low after the mode change, e.g. by the operator opening a door 5 to enter the robot cell 1.

In an example, FIG. 5C may represent a use case in which an operator, during production, wishes to resolve an operational failure in the robot cell 1, e.g. a jammed robot. This is achieved by the operator simply selecting mode MRS on the control panel 22 of the master computer 20.

FIG. 5D corresponds to FIG. 5A but illustrates signalling after a mode switch to MRS via the pendant unit 30. In accordance with Rule 8, even if CME is high and the master computer 20 switches CMR1 to high and CMR3 to low, while maintaining CMR2 at low, the robot control device 10 ignores CMR1-CMR3 and stays in MRS mode. However, when CME is toggled high-low-high, the robot control device 10 responds to the state of CMR1-CMR3 by setting CR1 to high and CR2 to low according to Rule 5. The states of CR1, CR2 causes the master computer 20 to set ACK1 to high and ACK2 to low. According to Rule 5, the operating mode of the robot control device 10 is thereby switched to AUTO.

In an example, FIG. 5D may represent a use case in which an operator observes a problem during production and commands a specific robot control device 10 to MRS mode via the pendant unit 30, thereby setting the mode controller 14 in the local control state. After having resolved the problem, the operator manipulates a switch to toggle CME, and switches all robots in the robot cell 1 to production mode by selecting mode AUTO on the control panel 22 of the master computer 20.

Many variations of the foregoing examples are conceivable. Instead of using separate central mode selection signals CMR1-CMR3 for each operating mode, a single central mode selection signal may be used to indicate a desired operating mode. It is also to be understood that any subset of the above-identified Rules may be implemented by the mode controller 14 to attain the related technical advantage(s). Further, it is conceivable that at least a subset of the related machines 2B in FIG. 1 are operated by machine control devices which are connected to and synchronized by the master computer 20 similar to the robot control devices 10. These machine control devices may be configured similar to the robot control devices 10 so as to allow the master computer 20 to switch operating mode of the machine control devices.

## Claims

1. A manufacturing system, comprising:
a plurality of industrial robots (2A),
a set of robot control devices (10), wherein each robot control device (10) is arranged to control a respective subset of the industrial robots (2A),
a central computer device (20) which is connected to the set of robot control devices (10) and configured to provide, to the set of robot control devices (10), at least one central mode selection signal (CMR1-CMR3) which defines a request for a switch of operating mode, and
at least one local computer device (30) connected to the set of robot control devices (10),
wherein the respective robot control device (10) comprises a mode controller (14), which is configured to set the operating mode of the respective robot control device (10) based on the at least one central mode selection signal (CMR1-CMR3),
wherein the mode controller (14) is operable to set the robot control device (10) in three different modes:
- an Automatic mode (AUTO), in which the respective robot control device (10) operates the respective subset of industrial robots (2A) in accordance with a predefined control program,
- a Manual Reduced Speed mode (MRS), in which the respective robot control device (10) operates the respective subset of the industrial robots (2A) to move at low speed based on an operation control signal from the local computer device (30), and
- a Manual Full Speed mode (MFS), in which the respective robot control device (10) operates the respective subset of the industrial robots (2A) to move at high speed based on an operation control signal from the local computer device (30).

2. The manufacturing system of claim 1, wherein the mode controller (14) is further configured to receive a local mode selection signal from the local computer device (30) and enter a local control state after having set the operating mode based on the local mode selection signal, wherein the mode controller (12) is configured to ignore the at least one central mode selection signal (CMR1-CMR3) when in the local control state.

3. The manufacturing system of claim 2, wherein the mode controller (14), when entering the local control state, is configured to cause the respective robot control device (10) to communicate an interlocking signal to other robot control devices (10) in the set of robot control devices (10), thereby causing the mode controllers (14) in the other robot control devices (10) to ignore the at least one central mode selection signal (CMR1-CMR3).

4. The manufacturing system of claim 2 or 3, wherein the mode controller (14) is further configured to leave the local control state based on an enabling signal (CME), which is provided by the central computer device (20) to the set of robot control devices (10) to represent a state of at least one operator confirmation switch (7).

5. The manufacturing system of any preceding claim, wherein the respective robot control device (10) comprises a safety controller (12) for communicating with the central computer device (20), the safety controller (12) being configured to verify data received from the central computer device (20) based on a predefined data communication protocol.

6. The manufacturing system of any preceding claim, wherein the mode controller (14) is configured to cause the respective robot control device (10) to provide, in response to the at least one central mode selection signal (CMR1-CMR3), a request (CR1; CR2) for acknowledgement to the central computer device (20).

7. The manufacturing system of claim 6, wherein the mode controller (14) is configured to set the operating mode of the respective robot control device (10), based on the at least one central mode selection signal (CMR1-CMR3), when receiving an acknowledgement signal (ACK1; ACK2) from the central computer device (20) in response to the request (CR1; CR2) for acknowledgement.

8. The manufacturing system of claim 7, wherein the mode controller (14) is configured to set the operating mode, based on the at least one central mode selection signal (CMR1-CMR3), if and only if the acknowledgement signal (ACK1; ACK2) is received within a predefined time period from the transmission of the request (CR1; CR2) for acknowledgement.

9. The manufacturing system of any preceding claim, wherein the mode controller (14) in the respective robot control device (10) is configured to set the operating mode of the respective robot control device (10) based on at least one input signal that represents a state of one or more switches and/or sensors (5, 7) associated with one or more robot cells (1).

10. The manufacturing system of claim 9, wherein the mode controller (14) in the respective robot control device (10) is further configured to set the operating mode of the respective robot control device (10) if and only if the at least one input signal indicates that the one or more robot cells (1), or a subset thereof, is secured and free of individuals.

11. The manufacturing system of claim 9 or 10, wherein the central computer device (20) is configured to provide, to the set of robot control devices (10), the at least one input signal (CME).

12. The manufacturing system of any preceding claims, wherein the central computer device (20) is configured to provide at least two central mode selection signals (CMR1-CMR3), wherein each of the central mode selection signals is associated with a respective operating mode (AUTO, MRS, MFS) and is set to either indicate a selection or a non-selection of the respective operating mode.

13. The manufacturing system of any of the preceding claims, wherein the local computer device (30) is a pendant unit.

## Patentansprüche

1. Herstellungssystem, das Folgendes umfasst:
eine Vielzahl von Industrierobotern (2A),
einen Satz von Robotersteuervorrichtungen (10), wobei jede Robotersteuervorrichtung (10) angeordnet ist, einen jeweiligen Untersatz der Industrieroboter (2A) zu steuern,
eine zentrale Computervorrichtung (20), die mit dem Satz von Robotersteuervorrichtungen (10) verbunden und dazu ausgelegt ist, dem Satz von Robotersteuervorrichtungen (10) mindestens ein zentrales Modusauswahlsignal (CMR1-CMR3) bereitzustellen, das eine Anforderung einer Umschaltung eines Betriebsmodus definiert, und
mindestens eine lokale Computervorrichtung (30), die mit dem Satz von Robotersteuervorrichtungen (10) verbunden ist,
wobei die jeweilige Robotersteuervorrichtung (10) eine Modussteuerung (14) umfasst, die dazu ausgelegt ist, den Betriebsmodus der jeweiligen Robotersteuervorrichtung (10) auf Basis des mindestens einen Modusauswahlsignals (CMR1-CMR3) einzustellen,
wobei die Modussteuerung (14) betreibbar ist, die Robotersteuervorrichtung (10) auf drei verschiedene Modi einzustellen:
- einen Automatikmodus (AUTO), bei dem die jeweilige Robotersteuervorrichtung (10) den jeweiligen Untersatz von Industrierobotern (2A) gemäß einem vordefinierten Steuerprogramm betreibt,
- einen manuellen Modus mit reduzierter Geschwindigkeit (MRS), bei dem die jeweilige Robotersteuervorrichtung (10) den jeweiligen Untersatz der Industrieroboter (2A) derart betreibt, dass sie sich auf Basis eines Betriebssteuersignals von der lokalen Computervorrichtung (30) mit niedriger Geschwindigkeit bewegen, und
- einen manuellen Modus mit voller Geschwindigkeit (MFS), bei dem die jeweilige Robotersteuervorrichtung (10) den jeweiligen Untersatz der Industrieroboter (2A) derart betreibt, dass sie sich auf Basis eines Betriebssteuersignals von der lokalen Computervorrichtung (30) mit hoher Geschwindigkeit bewegen.

2. Herstellungssystem nach Anspruch 1, wobei die Modussteuerung (14) ferner dazu ausgelegt ist, von der lokalen Computervorrichtung (30) ein lokales Modusauswahlsignal zu empfangen und in einen lokalen Steuerstatus zu wechseln, nachdem der Betriebsmodus auf Basis des lokalen Modusauswahlsignals eingestellt wurde, wobei die Modussteuerung (12) dazu ausgelegt ist, im lokalen Steuerstatus das mindestens eine zentrale Modusauswahlsignal (CMR1-CMR3) zu ignorieren.

3. Herstellungssystem nach Anspruch 2, wobei die Modussteuerung (14), wenn sie in den lokalen Steuerstatus wechselt, dazu ausgelegt ist, die jeweilige Robotersteuervorrichtung (10) zu veranlassen, ein Verriegelungssignal zu anderen Robotersteuervorrichtungen (10) im Satz von Robotersteuervorrichtungen (10) zu kommunizieren und dadurch die Modussteuerungen (14) in den anderen Robotersteuervorrichtungen (10) zu veranlassen, das mindestens eine zentrale Modusauswahlsignal (CMR1-CMR3) zu ignorieren.

4. Herstellungssystem nach Anspruch 2 oder 3, wobei die Modussteuerung (14) ferner dazu ausgelegt ist, den lokalen Steuerstatus auf Basis eines Aktivierungssignals (CME) zu verlassen, das dem Satz von Robotersteuervorrichtungen (10) durch die zentrale Computervorrichtung (20) bereitgestellt wird und einen Status von mindestens einem Bedienerbestätigungsschalter (7) repräsentiert.

5. Herstellungssystem nach einem der vorhergehenden Ansprüche, wobei die jeweilige Robotersteuervorrichtung (10) zum Kommunizieren mit der zentralen Computervorrichtung (20) eine Sicherheitssteuerung (12) umfasst, wobei die Sicherheitssteuerung (12) dazu ausgelegt ist, von der zentralen Computervorrichtung (20) empfangene Daten auf Basis eines vordefinierten Datenkommunikationsprotokolls zu verifizieren.

6. Herstellungssystem nach einem der vorhergehenden Ansprüche, wobei die Modussteuerung (14) dazu ausgelegt ist, die jeweilige Robotersteuervorrichtung (10) zu veranlassen, der zentralen Computervorrichtung (20) in Reaktion auf das mindestens eine zentrale Modusauswahlsignal (CMR1-CMR3) eine Anforderung (CR1; CR2) einer Quittierung bereitzustellen.

7. Herstellungssystem nach Anspruch 6, wobei die Modussteuerung (14) dazu ausgelegt ist, den Betriebsmodus der jeweiligen Robotersteuervorrichtung (10) auf Basis des mindestens einen zentralen Modusauswahlsignals (CMR1-CMR3) einzustellen, wenn in Reaktion auf die Anforderung (CR1; CR2) einer Quittierung ein Quittierungssignal (ACK1; ACK2) von der zentralen Computervorrichtung (20) empfangen wird.

8. Herstellungssystem nach Anspruch 7, wobei die Modussteuerung (14) dazu ausgelegt ist, den Betriebsmodus auf Basis des mindestens einen zentralen Modusauswahlsignals (CMR1-CMR3) nur und nur dann einzustellen, wenn das Quittierungssignal (ACK1; ACK2) ab der Übertragung der Anforderung (CR1; CR2) einer Quittierung innerhalb einer vordefinierten Zeitperiode empfangen wird.

9. Herstellungssystem nach einem der vorhergehenden Ansprüche, wobei die Modussteuerung (14) in der jeweiligen Robotersteuervorrichtung (10) dazu ausgelegt ist, den Betriebsmodus der jeweiligen Robotersteuervorrichtung (10) mindestens auf Basis eines Eingangssignals einzustellen, das einen Status von einem oder mehreren Schaltern und/oder Sensoren (5, 7), die mit einer oder mehreren Roboterzellen (1) verknüpft sind.

10. Herstellungssystem nach Anspruch 9, wobei die Modussteuerung (14) in der jeweiligen Robotersteuervorrichtung (10) ferner dazu ausgelegt ist, den Betriebsmodus der jeweiligen Robotersteuervorrichtung (10) nur und nur dann einzustellen, wenn das mindestens eine Eingangssignal anzeigt, dass die eine oder die mehreren Roboterzellen (1) bzw. ein Untersatz davon gesichert und frei von Individuen ist.

11. Herstellungssystem nach Anspruch 9 oder 10, wobei die zentrale Computervorrichtung (20) dazu ausgelegt ist, dem Satz von Robotersteuervorrichtungen (10) das mindestens eine Eingangssignal (CME) bereitzustellen.

12. Herstellungssystem nach einem der vorhergehenden Ansprüche, wobei die zentrale Computervorrichtung (20) dazu ausgelegt ist, mindestens zwei zentrale Modusauswahlsignale (CMR1-CMR3) bereitzustellen, wobei jedes der zentralen Modusauswahlsignale mit einem jeweiligen Betriebsmodus (AUTO, MRS, MFS) verknüpft und derart eingestellt ist, dass es entweder eine Auswahl oder eine Nichtauswahl des jeweiligen Betriebsmodus anzeigt.

13. Herstellungssystem nach einem der vorhergehenden Ansprüche, wobei die lokale Computervorrichtung (30) eine Programmiereinheit ist.

## Revendications

1. Système de fabrication, comprenant :
une pluralité de robots industriels (2A),
un ensemble de dispositifs de commande de robot (10), chaque dispositif de commande de robot (10) étant agencé pour commander un sous-ensemble respectif des robots industriels (2A),
un dispositif informatique central (20) qui est connecté à l'ensemble de dispositifs de commande de robot (10) et configuré pour fournir, à l'ensemble de dispositifs de commande de robot (10), au moins un signal de sélection de mode central (CMR1-CMR3) qui définit une demande de commutation de mode de fonctionnement, et
au moins un dispositif informatique local (30) connecté à l'ensemble de dispositifs de commande de robot (10), le dispositif de commande de robot (10) respectif comprenant un contrôleur de mode (14), qui est configuré pour régler le mode de fonctionnement du dispositif de commande de robot (10) respectif sur la base de l'au moins un signal de sélection de mode central (CMR1-CMR3), le contrôleur de mode (14) étant apte à régler le dispositif de commande de robot (10) sur trois modes différents :
- un mode automatique (AUTO), dans lequel le dispositif de commande de robot (10) respectif fait fonctionner le sous-ensemble respectif de robots industriels (2A) conformément à un programme de commande prédéfini,
- un mode manuel à vitesse réduite (MRS), dans lequel le dispositif de commande de robot (10) respectif fait fonctionner le sous-ensemble respectif des robots industriels (2A) pour qu'il se meuve à faible vitesse sur la base d'un signal de commande de fonctionnement en provenance du dispositif informatique local (30), et
- un mode manuel à vitesse réduite (MFS), dans lequel le dispositif de commande de robot (10) respectif fait fonctionner le sous-ensemble respectif des robots industriels (2A) pour qu'il se meuve à faible vitesse sur la base d'un signal de commande de fonctionnement en provenance du dispositif informatique local (30).

2. Système de fabrication selon la revendication 1, le contrôleur de mode (14) étant configuré en outre pour recevoir un signal de sélection de mode local en provenance du dispositif informatique local (30) et adopter un état de commande local après avoir réglé le mode de fonctionnement sur la base du signal de sélection de mode local, le contrôleur de mode (12) étant configuré pour ignorer l'au moins un signal de sélection de mode central (CMR1-CM3) lorsqu'il occupe l'état de commande local.

3. Système de fabrication selon la revendication 2, le contrôleur de mode (14), lorsqu'il adopte l'état de commande local, étant configuré pour amener le dispositif de commande de robot (10) respectif à communiquer un signal de verrouillage réciproque à d'autres dispositifs de commande de robot (10) dans l'ensemble de dispositifs de commande de robot (10), de manière à amener les contrôleurs de mode (14) dans les autres dispositifs de commande de robot (10) à ignorer l'au moins un signal de sélection de mode central (CMR1-CMR3).

4. Système de fabrication selon la revendication 2 ou 3, le contrôleur de mode (14) étant configuré en outre pour quitter l'état de commande local sur la base d'un signal d'activation (CME), qui est fourni par le dispositif informatique central (20) à l'ensemble de dispositifs de commande de robot (10) pour représenter un état d'au moins un interrupteur de confirmation opérateur (7).

5. Système de fabrication selon l'une quelconque des revendications précédentes, le dispositif de commande de robot (10) respectif comprenant un contrôleur de sécurité (12) destiné à communiquer avec le dispositif informatique central (20), le contrôleur de sécurité (12) étant configuré pour vérifier des données reçues en provenance du dispositif informatique central (20) sur la base d'un protocole de communication de données prédéfini.

6. Système de fabrication selon l'une quelconque des revendications précédentes, le contrôleur de mode (14) étant configuré pour amener le dispositif de commande de robot (10) respectif à fournir, en réponse à l'au moins un signal de sélection de mode central (CMR1-CMR3), une demande (CR1 ; CR2) d'acquittement au dispositif informatique central (20).

7. Système de fabrication selon la revendication 6, le contrôleur de mode (14) étant configuré pour régler le mode de fonctionnement du dispositif de commande de robot (10) respectif sur la base de l'au moins un signal de sélection de mode central (CMR1-CMR3), lorsqu'il reçoit un signal d'acquittement (ACK1 ; ACK2) en provenance du dispositif informatique central (20) en réponse à la demande (CR1 ; CR2) d'acquittement.

8. Système de fabrication selon la revendication 7, le contrôleur de mode (14) étant configuré pour régler le mode de fonctionnement sur la base de l'au moins un signal de sélection de mode central (CMR1-CMR3) si et seulement si le signal d'acquittement (ACK1 ; ACK2) est reçu dans un laps de temps prédéfini à compter de la transmission de la demande (CR1 ; CR2) d'acquittement.

9. Système de fabrication selon l'une quelconque des revendications précédentes, le contrôleur de mode (14) dans le dispositif de commande de robot (10) respectif étant configuré pour régler le mode de fonctionnement du dispositif de commande de robot (10) respectif sur la base d'au moins un signal d'entrée qui représente un état d'un ou de plusieurs interrupteurs et/ou capteurs (5, 7) associés à une ou plusieurs cellules (1) de robots.

10. Système de fabrication selon la revendication 9, le contrôleur de mode (14) dans le dispositif de commande de robot (10) respectif étant configuré en outre pour régler le mode de fonctionnement du dispositif de commande de robot (10) respectif si et seulement si l'au moins un signal d'entrée indique que les une ou plusieurs cellules (1) de robots, ou qu'un sous-ensemble de celles-ci, sont sécurisés et sans présence humaine.

11. Système de fabrication selon la revendication 9 ou 10, le dispositif informatique central (20) étant configuré pour fournir, à l'ensemble de dispositifs de commande de robot (10), l'au moins un signal d'entrée (CME).

12. Système de fabrication selon l'une quelconque des revendications précédentes, le dispositif informatique central (20) étant configuré pour fournir au moins deux signaux de sélection de mode central (CMR1-CMR3), chacun des signaux de sélection de mode central étant associé à un mode de fonctionnement (AUTO, MRS, MFS) respectif et étant positionné pour indiquer soit une sélection soit une non-sélection du mode de fonctionnement respectif.

13. Système de fabrication selon l'une quelconque des revendications précédentes, le dispositif informatique local (30) étant une unité suspendue.
